# EUROPÄISCHE PATENTANMELDUNG

(11) **EP 3 772 384 A1**
(43) Veröffentlichungstag der Anmeldung: **10.02.2021**
(21) Anmeldenummer: 19190488.7
(22) Anmeldetag: 07.08.2019
(51) Int. Cl.: B23B 29/034, B23B 51/00, B23C 5/00, B23C 5/24, B23D 77/02, B33Y 80/00

(54) **ROTIERENDES ZERSPANUNGSWERKZEUG**

(71) Anmelder: KOMET Deutschland GmbH, 74354 Besigheim (DE)
(72) Erfinder: SCHMID, Frank, 74354 Besigheim (DE); EDELMANN, Karl-Heinz, 74354 Besigheim (DE); HAUDECK, Tim, 74354 Besigheim (DE)
(74) Vertreter: Ciesla, Dirk

(57) **Zusammenfassung**

Es wird ein rotierendes Zerspanungswerkzeug (100) bereitgestellt, mit: einem Grundkörper (10), der sich entlang einer Längsachse (L) erstreckt und ein erstes Ende (11) zur Verbindung mit einer Maschinenschnittstelle und ein freies zweites Ende (12) aufweist, und zumindest einem additiv gefertigten Schneidenelementträger (20), der derart an dem zweiten Ende (12) des Grundkörpers (10) angeordnet ist, dass er sich von einem Umfangssegment des Grundkörpers (10) bezüglich der Längsachse (L) als Vorsprung nach radial außen erstreckt. Der Schneidenelementträger (20) weist zumindest einen Sitz (25) zur Aufnahme einer Schneide (50) oder einer Schneidenkassette (40) auf.

## Beschreibung

Die vorliegende Erfindung betrifft ein rotierendes Zerspanungswerkzeug.

Rotierende Zerspanungswerkzeuge, wie insbesondere Bohr-, Aufbohr-, Reib- und Fräswerkzeuge, kommen bei der spanabhebenden Bearbeitung von insbesondere metallischen Werkstoffen üblicherweise zum Einsatz. Neben rotierenden Zerspanungswerkzeugen, die einstückig aus einem harten und verschleißbeständigen Material, wie insbesondere Hartmetall (cemented carbide) oder Cermet gebildet sind, kommen dabei häufig Zerspanungswerkzeuge zum Einsatz, bei dem die mit dem zu zerspanenden Material in Eingriff gelangenden Schneiden an Schneideinsätzen aus einem harten und verschleißbeständigen Material ausgebildet sind, die an einem Grundkörper aus einem zäheren Material, wie insbesondere Stahl angeordnet sind. Die Schneideinsätze können dabei z.B. aus Hartmetall, Cermet oder einem Ultrahartwerkstoff wie polykristallinem Diamant (PKD) oder kubischem Bornitrid (CBN) oder einer Schneidkeramik gebildet sein und z.B. auswechselbar über Schrauben oder Klemmpratzen an dem Grundkörper befestigt oder auch materialschlüssig durch Löten oder Schweißen mit dem Grundkörper verbunden sein. In einigen Fällen sind die Schneideinsätze auch in sogenannten Kassetten gehalten, die wiederum mit dem Grundkörper verbunden sind, wobei in den Kassetten z.B. auch ein Verstellmechanismus für eine exakte Positionierung der Schneideinsätze vorgesehen sein kann.

Insbesondere bei der Bearbeitung von Bohrungen mit relativ großen Durchmessern, wie es z.B. bei der Bearbeitung von Statorgehäusen für Elektromotoren der Fall ist, tritt das Problem auf, dass die Werkzeuge sehr groß, damit schwer und zudem aufwändig in der Herstellung sind. Ferner müssen für die Erzeugung verschiedener Bohrungsgeometrien jeweils speziell an diese angepasste Sonderwerkzeuge bereitgestellt werden. Dies tritt besonders ausgeprägt in dem Fall von abgestuften Bohrungen auf, bei denen die Sitze zur Aufnahme von Schneiden oder von die Schneiden aufnehmenden Kassetten jeweils spezifisch in ihrer axialen und radialen Position bezüglich einer Längsachse des Zerspanungswerkzeugs an die zu erzeugende bzw. zu bearbeitende Bohrung angepasst werden müssen.

Es ist Aufgabe der vorliegenden Erfindung, ein verbessertes rotierendes Zerspanungswerkzeug bereitzustellen.

Die Aufgabe wird durch ein rotierendes Zerspanungswerkzeug nach Anspruch 1 gelöst. Vorteilhafte Weiterbildungen sind in den abhängigen Ansprüchen angegeben.

Das rotierende Zerspanungswerkzeug hat einen Grundkörper, der sich entlang einer Längsachse erstreckt und ein erstes Ende zur Verbindung mit einer Maschinenschnittstelle und ein freies zweites Ende aufweist, und zumindest einen additiv gefertigten Schneidenelementträger, der derart an dem zweiten Ende des Grundkörpers angeordnet ist, dass er sich von einem Umfangssegment des Grundkörpers bezüglich der Längsachse als Vorsprung nach radial außen erstreckt. Der Schneidenelementträger weist zumindest einen Sitz zur Aufnahme einer Schneide oder einer Schneidenkassette auf.

Aufgrund des Schneidenelementträgers, der sich von einem Umfangssegment des Grundkörpers nach radial außen erstreckt, ist der Sitz zur Aufnahme der Schneide oder der Schneidenkassette nicht in dem Grundkörper ausgebildet, sodass ein Grundkörper variabel mit verschiedenen Schneidenelementträgern versehen werden kann, um verschiedene Bearbeitungsoperationen, wie z.B. verschiedene Bohrungsdurchmesser, verschiedene Formen von Stufenbohrungen, etc. , mit demselben Grundkörper realisieren zu können. Unter von einem Umfangssegment nach radial außen erstreckend ist dabei zu verstehen, dass der Schneidenelementträger nicht den gesamten Außenumfang des Grundkörpers umgreift, sondern sich nur von einem Teil des Außenumfangs, also einem Umfangssegment aus, erstreckt. Gegenüber einer Realisierung, bei der ein Schneidenelementträger den gesamten Außenumfang des Grundkörpers umgreifen würde, wird in dieser Weise eine besonders große Variabilität in der Ausgestaltung des Schneidenelementträgers ermöglicht. Ferner wird in dieser Weise erreicht, dass der additiv gefertigte Schneidenelementträger nur ein relativ geringes Bauvolumen aufweisen muss, was sich sehr positiv auf die Herstellungskosten bei der additiven Fertigung auswirkt. Durch die additive Fertigung des Schneidenelementträgers kann dieser sehr schnell und einfach mit einer großen Zahl an verschiedenen Geometrien gefertigt werden, sodass basierend auf demselben Grundkörper eine Vielzahl an verschiedenen rotierenden Zerspanungswerkzeugen hergestellt werden kann. Dabei kann der Grundkörper in großen Stückzahlen gefertigt werden, was sich wiederum positiv auf die Herstellungskosten auswirkt. Durch die additive Fertigung können ferner die sich bezüglich der Längsachse des Grundkörpers radial außen befindlichen Schneidenelementträger als sehr leichte Bauteile realisiert werden, wodurch auch bei einer Auslegung für eine Bearbeitung von z.B. sehr großen Bohrungen das rotierende Zerspanungswerkzeug insgesamt mit einem relativ geringen Trägheitsmoment realisiert werden kann. Dies wirkt sich bei der zerspanenden Bearbeitung mit dem Zerspanungswerkzeug besonders positiv aus. Ferner kann in dieser Weise auch das Gesamtgewicht des Zerspanungswerkzeugs gering gehalten werden. Durch das Vorsehen von sich von dem Grundkörper nach radial außen erstreckenden Schneidenelementträgern kann der Durchmesser des Grundkörpers selbst dann gering gehalten werden, wenn das gesamte rotierende Zerspanungswerkzeug einen großen Durchmesser aufweisen muss, wie es z.B. bei der Bearbeitung von Statorbohrungen für Elektromotoren der Fall ist. Die Schneidenelementträger stehen somit in radialer Richtung wesentlich von dem Grundkörper hervor, sodass das Zerspanungswerkzeug durch die Schneidenelementträger einen deutlich größeren Durchmesser als den Durchmesser des Grundkörpers hat. Abhängig von unter anderem dem Material des Schneidenelementträgers kann der Sitz zum Beispiel für die direkte Aufnahme einer Schneide ausgebildet sein. Es kann aber in vielen Fällen vorteilhaft sein, wenn der Sitz zur Aufnahme einer Schneidenkassette ausgebildet ist, die dann die eigentliche Schneide aufnimmt.

Gemäß einer Weiterbildung ist der Schneidenelementträger aus einem Kunststoff gebildet. Dies ermöglicht eine besonders gewichtssparende Auslegung des Zerspanungswerkzeugs. Bevorzugt kann der Schneidenelementträger aus einem faserverstärkten Kunststoff gebildet sein. In diesem Fall sind eine hohe Steifigkeit und Stabilität erzielbar. Der faserverstärkte Kunststoff kann dabei insbesondere eine Kunststoffmatrix aufweisen, in der Carbonfasern, Aramidfasern, Glasfasern und/oder Diolenfasern eingebettet sind, wobei unter Gewichts- und Steifigkeitsaspekten Carbonfasern bevorzugt sind. Die eingebetteten Fasern können dabei im Wesentlichen isotrop ausgerichtete Kurzfasern aufweisen. Es können aber besonders bevorzugt auch Langfasern gezielt mit einer vorgegebenen Orientierung eingebettet werden, um in einer oder mehreren Richtungen eine besonders hohe Steifigkeit bereitzustellen.

Gemäß einer Weiterbildung ist bei dem Zerspanungswerkzeug eine Mehrzahl von Sitzen an verschiedenen axialen und radialen Positionen bezüglich der Längsachse des Grundkörpers ausgebildet. In diesem Fall kann das Zerspanungswerkzeug besonders vorteilhaft für das Erzeugen einer Stufenbohrung ausgelegt werden. Die Sitze können dabei an verschiedenen Schneidenelementträgern ausgebildet werden. Es können aber auch mehrere Sitze an einem Schneidenelementträger vorgesehen sein.

Gemäß einer Weiterbildung weist der Schneidenelementträger eine Mehrzahl von Sitzen zur Aufnahme von Schneiden oder Schneidenkassetten auf. Die Mehrzahl von Sitzen kann über den Umfang des Grundkörpers verteilt angeordnet sein. In diesem Fall können mehrere Schneidkanten des Zerspanungswerkzeugs an einem Schneidenelementträger angeordnet werden. Die Sitze können dabei an der gleichen axialen und radialen Position ausgebildet sein, um eine Mehrzahl von Schneidkanten für die Bearbeitung von z.B. einem Bohrungsdurchmesser bereitzustellen, oder auch an verschiedenen axialen und radialen Positionen, um z.B. eine Stufenbohrung bearbeiten zu können.

Gemäß einer Weiterbildung ist an einem Schneidenelementträger eine Mehrzahl von an verschiedenen axialen und radialen Positionen bezüglich der Längsachse des Grundkörpers ausgebildeten Sitzen ausgebildet. In diesem Fall können an einem Schneidenelementträger Schneiden für die Bearbeitung von z.B. verschiedenen Bohrungsdurchmessern einer Stufenbohrung angeordnet werden.

Gemäß einer Weiterbildung ist der Schneidenelementträger über eine reversible Verbindung mit dem Grundkörper verbunden. In diesem Fall kann der Schneidenelementträger in einfacher Weise ausgewechselt werden, wenn der Schneidenelementträger verschlissen sein sollte oder eine andere Geometrie an einem zu bearbeitenden Werkstück mit dem Zerspanungswerkzeug erzeugt werden soll. Die reversible Verbindung kann z.B. insbesondere durch eine Schraubverbindung realisiert sein. Insbesondere kann z.B. bevorzugt der Schneidenelementträger mittels einer oder mehrerer Befestigungsschrauben an dem Grundkörper befestigt sein. Dies ermöglicht eine besonders einfache und zeitsparende Montage und Auswechslung des Schneidenelementträgers.

Gemäß einer Weiterbildung weist der Schneidenelementträger einen sich überwiegend in radialer Richtung erstreckenden Halteabschnitt, an dem der Sitz ausgebildet ist, und eine bezüglich einer vorgegebenen Rotationsrichtung des Zerspanungswerkzeugs in Umfangsrichtung hinter dem Sitz ansetzende, einstückig mit dem Halteabschnitt ausgebildete Stützstrebe zur Abstützung gegen Tangentialkräfte auf. In diesem Fall wird in kompakter und leichter Bauweise durch den Halteabschnitt ein großer Durchmesser des Zerspanungswerkzeugs bereitgestellt und durch die Stützstrebe wird dabei eine hohe Steifigkeit gegenüber bei der zerspanenden Bearbeitung auftretenden, in Umfangsrichtung wirkenden Torsionskräften erzielt. Dies ist insbesondere bei einer Auslegung des rotierenden Zerspanungswerkzeugs als Bohr- oder Aufbohrwerkzeug für die Bearbeitung von großen Bohrungen sehr vorteilhaft. Bevorzugt kann ein von dem Halteabschnitt abgewandtes Ende der Stützstrebe an dem Grundkörper befestigt sein. Es kann dabei insbesondere bevorzugt bezüglich der Rotationsrichtung hinter dem Halteabschnitt an dem Grundkörper befestigt sein.

Gemäß einer Weiterbildung erstreckt sich die Stützstrebe gekrümmt von dem Halteabschnitt zu dem Grundkörper. In diesem Fall wird die Steifigkeit gegenüber Torsionskräften in besonders kompakter und leichter Weise erreicht. Gemäß einer Weiterbildung sind in dem Schneidenelementträger Langfasern eingebettet. Diese Ausgestaltung ermöglicht eine besonders hohe Steifigkeit bei geringem Baumaß und geringem Gewicht. Die Langfasern können sich dabei bevorzugt in einer zu der Längsachse im Wesentlichen senkrechten Ebene erstrecken.

Wenn sich die Stützstrebe mit zunehmendem Abstand von dem Halteabschnitt von dem freien Ende des Grundkörpers entfernt, so wird auch eine gute Abstützung gegen Schnittkräfte bereitgestellt, die bei einem Vorschub des Zerspanungswerkzeugs entlang der Längsachse auf den Schneidenelementträger wirken.

Gemäß einer Weiterbildung ist an dem Sitz eine Schneidenkassette angeordnet, in der eine Schneide gehalten ist. In diesem Fall kann die Schneidenkassette z.B. aus einem anderen Material als der Schneidenelementträger ausgebildet sein. Ferner kann bevorzugt an dem Sitz oder einer an dem Sitz angeordneten Schneidenkassette eine Feineinstellvorrichtung zur Feineinstellung einer axialen und/oder radialen Position der Schneide vorgesehen sein.

Gemäß einer Weiterbildung ist die Schneidenkassette aus einem verschleißbeständigeren Material als der Schneidenelementträger gebildet. Dies kann insbesondere dann vorteilhaft sein, wenn der Schneidenelementträger aus einem sehr leichten Material, wie insbesondere Kunststoff, ausgebildet ist.

Gemäß einer Weiterbildung sind zumindest zwei Schneidenelementträger an dem zweiten Ende des Grundkörpers angeordnet. Die Schneidenelementträger können dabei bevorzugt an unterschiedlichen Positionen in der Umfangsrichtung des Grundkörpers und/oder an unterschiedlichen axialen Positionen des Grundkörpers angeordnet sein. Gemäß einer Ausgestaltung können zumindest zwei Schneidenelementträger auf bezüglich der Längsachse gegenüberliegenden Seiten des Grundkörpers angeordnet sein. Dies ist insbesondere vorteilhaft, wenn das Zerspanungswerkzeug als ein Bohr- oder Aufbohrwerkzeug ausgebildet ist.

Gemäß einer Weiterbildung ist das Zerspanungswerkzeug als ein Aufbohrwerkzeug ausgebildet. Das Zerspanungswerkzeug kann dabei insbesondere als ein Aufbohrwerkzeug für die Bearbeitung von Statorgehäusen für Elektromotoren ausgebildet sein.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Ansicht eines rotierenden Zerspanungswerkzeugs gemäß einer ersten Ausführungsform;
- Fig. 2:: eine schematische Seitenansicht des Zerspanungswerkzeugs in einer Blickrichtung senkrecht zu dessen Längsachse;
- Fig. 3:: eine schematische Seitenansicht des Zerspanungswerkzeugs in einer Blickrichtung senkrecht zur Längsachse und senkrecht zur Blickrichtung aus Fig. 2;
- Fig. 4:: eine schematische Stirnansicht des Zerspanungswerkzeugs gemäß der ersten Ausführungsform;
- Fig. 5:: eine schematische perspektivische Ansicht des Grundkörpers des Zerspanungswerkzeugs im Bereich des zweiten Endes ohne Schneidenelementträger;
- Fig. 6:: eine schematische perspektivische Darstellung des Schneidenelementträgers bei der ersten Ausführungsform;
- Fig. 7:: eine andere schematische perspektivische Darstellung des Schneidenelementträgers;
- Fig. 8:: eine schematische Seitenansicht des Schneidenelementträgers;
- Fig. 9:: eine weitere schematische Seitenansicht des Schneidenelementträgers;
- Fig. 10:: eine weitere schematische Ansicht des Schneidenelementträgers;
- Fig. 11:: eine schematische perspektivische Ansicht eines rotierenden Zerspanungswerkzeugs gemäß einer zweiten Ausführungsform;
- Fig. 12:: eine schematische perspektivische Ansicht eines rotierenden Zerspanungswerkzeugs gemäß einer dritten Ausführungsform;
- Fig. 13:: eine schematische Stirnansicht des Zerspanungswerkzeugs gemäß der dritten Ausführungsform;
- Fig. 14:: eine schematische Seitenansicht des Zerspanungswerkzeugs gemäß der dritten Ausführungsform;
- Fig. 15:: eine schematische perspektivische Ansicht eines rotierenden Zerspanungswerkzeugs gemäß einer vierten Ausführungsform;
- Fig. 16:: eine schematische Stirnansicht des Zerspanungswerkzeugs gemäß der vierten Ausführungsform; und
- Fig. 17:: eine schematische Seitenansicht des Zerspanungswerkzeugs gemäß der vierten Ausführungsform.

### ERSTE AUSFÜHRUNGSFORM

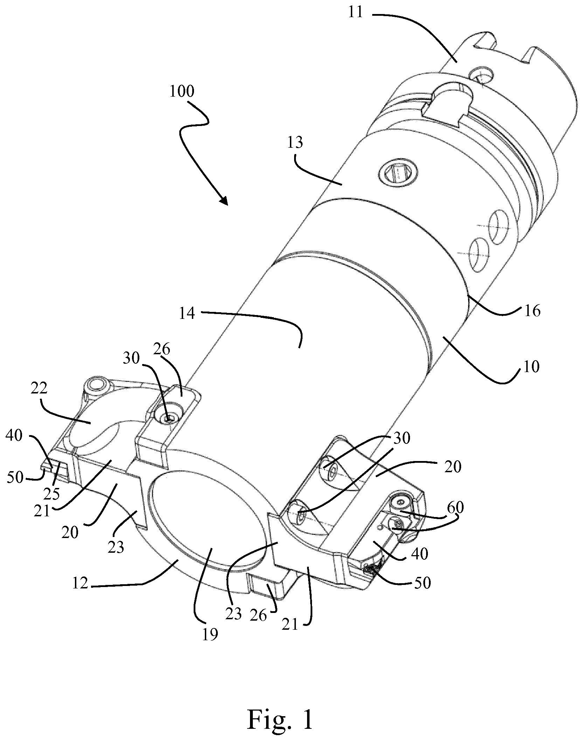

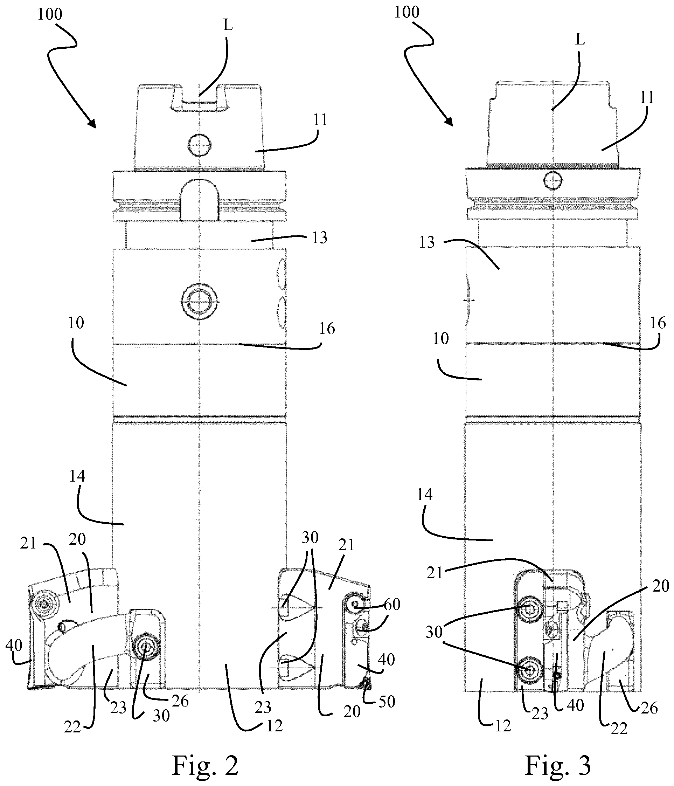

Eine erste Ausführungsform des rotierenden Zerspanungswerkzeugs 100 wird im Folgenden unter Bezugnahme auf die Fig. 1 bis Fig. 10 beschrieben. Das rotierende Zerspanungswerkzeug 100 ist bei der dargestellten Ausführungsform als ein Aufbohrwerkzeug ausgebildet, insbesondere für die Bearbeitung von Bohrungen mit einem großen Durchmesser, wie es bei Bohrungen in Statorgehäusen für Elektromotoren der Fall ist. Das Zerspanungswerkzeug 100 kann insbesondere speziell für die Bohrungsbearbeitung in Statorgehäusen für Elektromotoren ausgelegt sein.

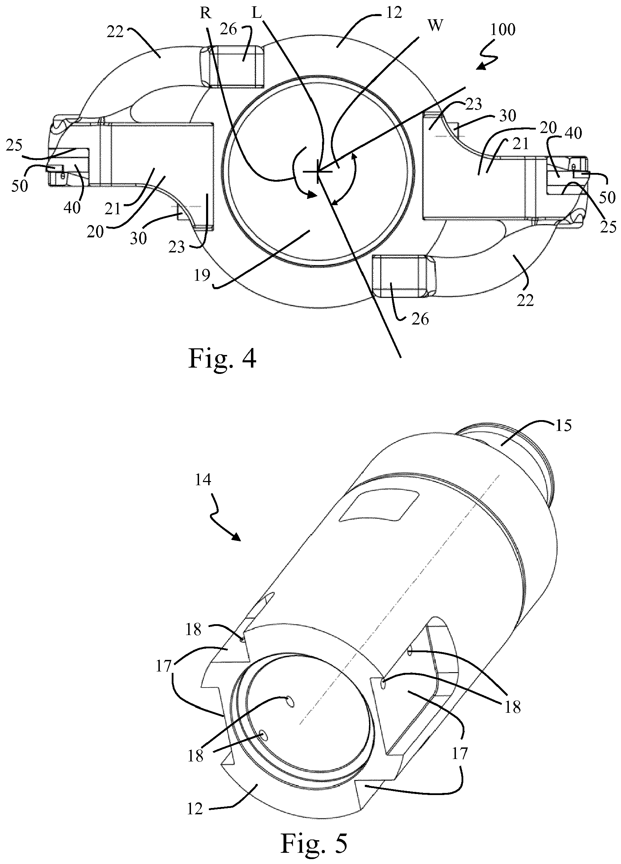

Das Zerspanungswerkzeug 100 weist einen Grundkörper 10 auf, der sich entlang einer Längsachse L erstreckt und ein erstes Ende 11 zur Verbindung mit einer (nicht dargestellten) Maschinenschnittstelle und ein freies zweites Ende 12 aufweist. Das erste Ende 11 kann dabei insbesondere zur Verbindung mit einer üblichen, auf dem Markt befindlichen Maschinenschnittstelle, wie z.B. einer HSK-Schnittstelle, ausgebildet sein. Bei der in den Fig. 1 bis Fig. 5 dargestellten ersten Ausführungsform ist der Grundkörper 10 zweiteilig aufgebaut und weist einen hinteren Abschnitt 13 auf, an dem das erste Ende 11 ausgebildet ist, und einen vorderen Abschnitt 14, der das freie zweite Ende 12 hat, das im Folgenden noch eingehender beschrieben wird. Bei der Ausführungsform sind der hintere Abschnitt 13 und der vordere Abschnitt 14 z.B. über eine Schnittstelle 16 miteinander verbunden, die z.B. als eine ABS®-Schnittstelle ausgebildet sein kann. In Fig. 5 ist nur der vordere Abschnitt 14 dargestellt, der bei der Ausführungsform den vorspringenden zylindrischen Zapfen 15 der ABS®-Schnittstelle aufweist. Obwohl bei der Ausführungsform eine solche zweigeteilte Ausgestaltung des Grundkörpers 10 gezeigt ist, kann der Grundkörper 10 auch einstückig derart ausgebildet sein, dass er sich ungeteilt von dem ersten Ende 11 bis zu dem zweiten Ende 12 erstreckt. Dies gilt ferner auch für die weiter unten beschriebenen weiteren Ausführungsformen. Die zweiteilige Ausgestaltung des Grundkörpers 10 ermöglicht es jedoch, einen gleichbleibenden hinteren Abschnitt 13 mit verschiedenen vorderen Abschnitten 14 zu kombinieren, um z.B. unterschiedliche axiale Längen des Zerspanungswerkzeugs 100 bereitzustellen. Das Zerspanungswerkzeug 100 ist dazu ausgelegt, bei der Bearbeitung in einer vorgegebenen Rotationsrichtung R um die Längsachse L zu rotieren, wie in Fig. 4 schematisch dargestellt ist.

Der Grundkörper 10 erstreckt sich schaftartig von dem ersten Ende 11 bis zu dem zweiten Ende 12 und kann insbesondere aus einem metallischen Werkstoff, wie z.B. Stahl, gebildet sein. Der Grundkörper 10 kann dabei insbesondere in herkömmlicher Weise spanabhebend aus dem Werkstoff gefertigt sein. Der Grundkörper 10 erstreckt sich bei der ersten Ausführungsform mit einer im Wesentlichen zylindrischen Grundform von dem ersten Ende 11 bis zu dem zweiten Ende 12. Wie insbesondere in Fig. 5 zu sehen ist, sind in dem Bereich des zweiten Endes an dem Außenumfang des Grundkörpers 10 Befestigungsschnittstellen 17 zur Befestigung von Schneidenelementträgern 20 ausgebildet, die nachfolgend noch eingehender beschrieben werden. Bei dem dargestellten Ausführungsbeispiel sind die Befestigungsschnittstellen 17 als Ausnehmungen bzw. Taschen ausgebildet, in die die Schneidenelementträger 20 mit einem jeweiligen Befestigungsabschnitt eingeführt werden können. Die Befestigungsschnittstellen 17 können aber auch in anderer Weise realisiert werden. An den Befestigungsschnittstellen 17 sind in dem Grundkörper 10 bei der Ausführungsform ferner Gewindebohrungen 18 ausgebildet, an denen die Schneidenelementträger 20 mit entsprechenden Befestigungsschrauben 30 reversibel befestigt werden können.

Wie insbesondere in Fig. 5 zu sehen ist, ist der Grundkörper 10 in dem Bereich des zweiten Endes 12 mit einer im Wesentlichen hohlzylindrischen Grundform versehen, sodass in dem Grundkörper 10 in dem Bereich des zweiten Endes 12 ein Hohlraum ausgebildet ist. In dieser Weise kann das Gewicht des Zerspanungswerkzeugs 100 niedrig gehalten werden. Bei der dargestellten Ausführungsform wird dieser Hohlraum stirnseitig an dem zweiten Ende 12 mit einem Deckel 19 verschlossen, wie in den Fig. 1 und Fig. 4 dargestellt ist.

Bei der ersten Ausführungsform sind, wie in Fig. 1 zu sehen ist, insgesamt zwei Schneidenelementträger 20 an dem Grundkörper 10 befestigt. Die Schneidenelementträger 20 sind dabei an zueinander gegenüberliegenden Seiten bezüglich der Längsachse L des Grundkörpers 10 angeordnet. Obwohl bei dem Ausführungsbeispiel beispielhaft zwei Schneidenelementträger 20 vorgesehen sind, können jedoch auch mehr als zwei oder nur ein Schneidenelementträger 20 vorgesehen sein. Wie in den Fig. 1 bis Fig. 4 zu sehen ist, sind die Schneidenelementträger 20 jeweils an einem Umfangssegment des zweiten Endes 12 des Grundkörpers 10 angeordnet. Mit anderen Worten erstrecken sich die Schneidenelementträger 20, wie in Fig. 4 zu sehen ist, nicht über den gesamten Umfang des Grundkörpers 10, sondern nur über einen Teilwinkelbereich W des Umfangs, der insbesondere weniger als 180° betragen kann, bevorzugt weniger als 140°.

Der jeweilige Schneidenelementträger 20 erstreckt sich im montierten Zustand bezüglich der Längachse L als Vorsprung nach radial außen von dem Grundkörper 10 weg, sodass das Zerspanungswerkzeug 100 durch die Schneidenelementträger 20 verglichen mit dem Außenumfang des Grundkörpers 10 einen wesentlich größeren Außenumfang erhält. Der Schneidenelementträger 20 muss sich dabei nicht nur in der radialen Richtung erstrecken, sondern kann auch Richtungsanteile in der Umfangsrichtung und in der axialen Richtung aufweisen. Der Schneidenelementträger 20 erstreckt sich aber auf jeden Fall als Vorsprung bzw. Stollen nach radial außen von dem Grundkörper 10.

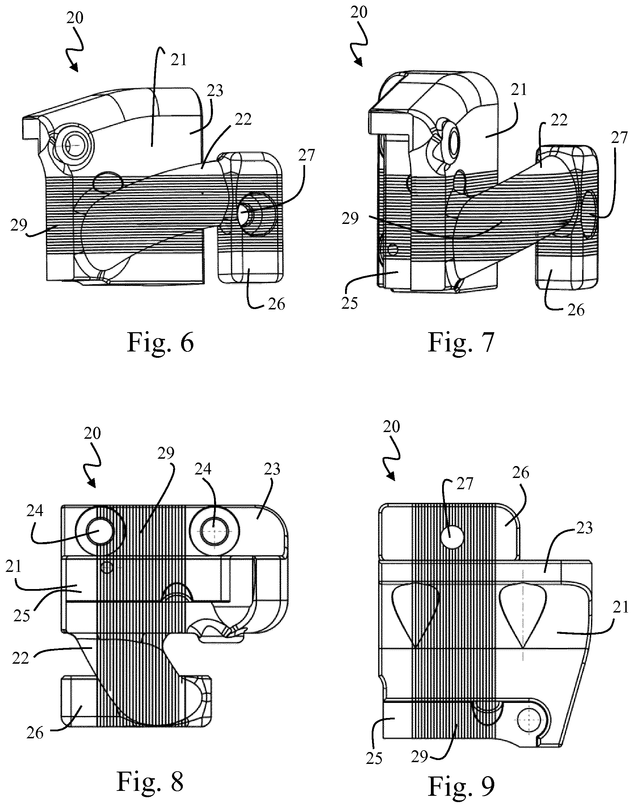

Nachfolgend wird der Schneidenelementträger 20 unter Bezugnahme auf die Fig. 6 bis Fig. 10 eingehender beschrieben.

Der Schneidenelementträger 20 ist durch ein additives Herstellungsverfahren gefertigt und weist bei der Ausführungsform einen Halteabschnitt 21 und eine Stützstrebe 22 auf. Der Halteabschnitt 21 und die Stützstrebe 22 sind einstückig additiv gefertigt. Wie insbesondere in Fig. 1 zu sehen ist, bildet der Halteabschnitt 21 den überwiegenden Teil des Schneidenelementträgers 20 und erstreckt sich in Form einer Strebe von dem Außenumfang des Grundkörpers 10 nach außen. Der Halteabschnitt 21 weist einen Befestigungsabschnitt 23 auf, über den der Halteabschnitt 21 mittels Befestigungsschrauben 30 an dem Grundkörper 10 befestigt wird. Dazu weist der Befestigungsabschnitt 23 bei der Ausführungsform zwei Durchgangslöcher 24 auf, durch die jeweils der Gewindeabschnitt einer Befestigungsschraube 30 derart hindurchgeführt werden kann, dass sich der Kopf der Befestigungsschraube 30 an dem das Durchgangsloch 24 umgebenden Bereich des Befestigungsabschnitts 23 abstützt. Obwohl bei der dargestellten Ausführungsform beispielhaft zwei Durchgangslöcher 24 zur Aufnahme der Befestigungsschrauben 30 dargestellt sind, ist es z.B. auch möglich, nur ein solches Durchgangsloch 24 oder mehr als zwei solche Durchgangslöcher 24 an dem Befestigungsabschnitt 23 vorzusehen.

An einem im montierten Zustand radial außen liegenden Bereich weist der Halteabschnitt 21 einen Sitz 25 auf, der zur Aufnahme einer Schneide oder einer Schneidenkassette ausgebildet ist. In dem Fall einer Schneidenkassette ist die eigentliche Schneide somit nicht unmittelbar an dem Sitz 25 befestigt, sondern mittelbar über die zwischengeordnete Schneidenkassette an dem Sitz 25 befestigt. Obwohl im Folgenden mit Bezug auf die Figuren lediglich Realisierungen beschrieben werden, bei denen die Schneide mittelbar über eine Schneidenkassette an dem Sitz 25 befestigt ist, sind auch Realisierungen möglich, bei denen die Schneide jeweils unmittelbar an dem Sitz 25 befestigt ist.

Wie insbesondere in Fig. 4 zu sehen ist, setzt die Stützstrebe 22, die zur Abstützung gegenüber bei der Zerspanung wirkenden Tangentialkräften dient, bezüglich der vorgegebenen Rotationsrichtung R des Zerspanungswerkzeugs 100 in Umfangsrichtung hinter dem Sitz 25 an dem Halteabschnitt 21 an. Bei der Ausführungsform erstreckt sich die Stützstrebe 22 gekrümmt von dem Halteabschnitt 21 zu dem Grundkörper 10. Auf der dem Grundkörper 10 zugewandten Seite der Stützstrebe 22 hat die Stützstrebe 22 einen Befestigungsabschnitt 26, über den die Stützstrebe 22 mittels einer Befestigungsschraube 30 an dem Grundkörper 10 befestigt ist. Dazu weist der Befestigungsabschnitt 26 bei der Ausführungsform ein Durchgangsloch 27 auf, durch das der Gewindeabschnitt einer Befestigungsschraube 30 derart hindurchgeführt werden kann, dass sich der Kopf der Befestigungsschraube 30 an dem das Durchgangsloch 27 umgebenden Bereich des Befestigungsabschnitts 26 abstützt. Obwohl bei der Ausführungsform ein solches Durchgangsloch 27 gezeigt ist, können z.B. auch mehrere solche Durchgangslöcher 27 vorgesehen sein. Die Stützstrebe 22 erstreckt sich bei der dargestellten Ausführungsform ferner ausgehend von dem Halteabschnitt 21 nicht nur in Umfangsrichtung nach hinten, sondern auch leicht in der axialen Richtung, sodass sie sich mit zunehmendem Abstand von dem Halteabschnitt 21 auch von dem zweiten Ende 12 des Grundkörpers 10 entfernt.

Bei der dargestellten Ausführungsform ist an dem Sitz 25 eine Schneidenkassette 40 angeordnet, an der wiederum eine Schneide 50 befestigt ist, die dazu ausgebildet ist, zerspanend mit dem zu bearbeitenden Werkstück in Eingriff zu gelangen. Es ist ferner eine Feineinstellvorrichtung 60 zur Feineinstellung der axialen und radialen Position der Schneide 50 an der Schneidenkassette 40 bzw. dem Sitz 25 vorgesehen.

Wie bereits beschrieben, ist der Schneidenelementträger 20 bei der Ausführungsform durch ein additives Herstellungsverfahren gefertigt. Der Schneidenelementträger 20 ist vorliegend aus einem Kunststoff, insbesondere einem faserverstärkten Kunststoff, wie insbesondere CFK (carbonfaserverstärktem Kunststoff), Aramidfaser-verstärktem Kunststoff, GFK (glasfaserverstärktem Kunststoff) oder Diolenfaser-verstärktem Kunststoff gebildet, bevorzugt aus CFK. In dem faserverstärkten Kunststoff ist insbesondere eine Vielzahl von Kurzfasern im Wesentlichen ungerichtet bzw. isotrop in der Kunststoffmatrix eingebettet. Die additive Fertigung kann dabei z.B. in einem Filamentdruckverfahren erfolgen, bei dem die zu erzeugende Form sukzessiv durch das Ablegen und Aushärten eines Filaments aus dem Kunststoff erfolgt, oder auch durch ein dreidimensionales Druckverfahren, bei dem die zu erzeugende Form sukzessiv durch den Aufbau und das Aushärten einzelner Volumenelemente erzeugt wird. In Abhängigkeit von dem verwendeten Material für den Schneidenelementträger 20 kann dieser z.B. auch in einem Stereolithografie-Verfahren oder durch selektives Lasersintern (SLS) bzw. selektives Laserschmelzen (SLM) gefertigt werden.

Bei der Ausführungsform ist in dem faserverstärkten Kunststoff des Schneidenelementträgers 20 ferner eine Vielzahl von Langfasern 29 gerichtet eingebettet, wie in den Fig. 6 bis Fig. 10 schematisch dargestellt ist. Das Einbetten der Langfasern 29 kann bei dem additiven Fertigungsverfahren z.B. insbesondere durch eine parallele Zufuhr der Langfasern 29 bei dem sukzessiven Aufbau der Form des Schneidelementträgers 20 erfolgen. Die Langfasern 29 können dabei bevorzugt derart eingebettet werden, dass sie sich zumindest im Wesentlichen in einer Ebene erstrecken, die senkrecht zu der Längsachse L des Zerspanungswerkzeugs 100 ausgerichtet ist. Zumindest einige der Langfasern 29 erstrecken sich dabei bevorzugt durchgehend von dem Halteabschnitt 21 durch die Stützstrebe 22 bis zu dem Befestigungsabschnitt 26 der Stützstrebe 22. Die eingebetteten Langfasern können dabei z.B. Carbonfasern, Aramidfasern, Glasfasern und/oder Diolenfasern sein, insbesondere bevorzugt Carbonfasern.

Die Schneidenkassette 40 ist bei der Ausführungsform aus einem verschleißbeständigeren Material als der Schneidenelementträger 20 gebildet. Die Schneidenkassette 40 kann insbesondere aus einem metallischen Werkstoff, insbesondere z.B. aus Stahl gebildet sein. Die eigentliche Schneide 50 ist aus einem besonders harten und verschleißbeständigen Material gebildet, wie es typischerweise in der Zerspanung zum Einsatz kommt, insbesondere z.B. aus Hartmetall (cemented carbide), Cermet, polykristallinem Diamant (PKD), kubischem Bornitrid (CBN) oder einer Schneidkeramik. Dabei kann die Schneide z.B. auch einen Bereich aus Ultrahartwerkstoff wie PKD oder CBN aufweisen, der wiederum auf einem Bereich aus Hartmetall oder Cermet angeordnet ist.

Bei dem Zerspanungswerkzeug 100 gemäß der ersten Ausführungsform sind zwei Sitze 25 zur Aufnahme von Schneiden 50 bzw. Schneidenkassetten 40 über den Umfang des Grundkörpers 10 verteilt angeordnet. Die Sitze 25 sind bei der ersten Ausführungsform an zwei verschiedenen Schneidenelementträgern 20 ausgebildet und befinden sich an denselben axialen und radialen Positionen bezüglich der Längsachse L des Grundkörpers 10, sodass das Zerspanungswerkzeug 100 zwei Schneidkanten zur Bearbeitung desselben Bohrungsabschnitts aufweist.

### ZWEITE AUSFÜHRUNGSFORM

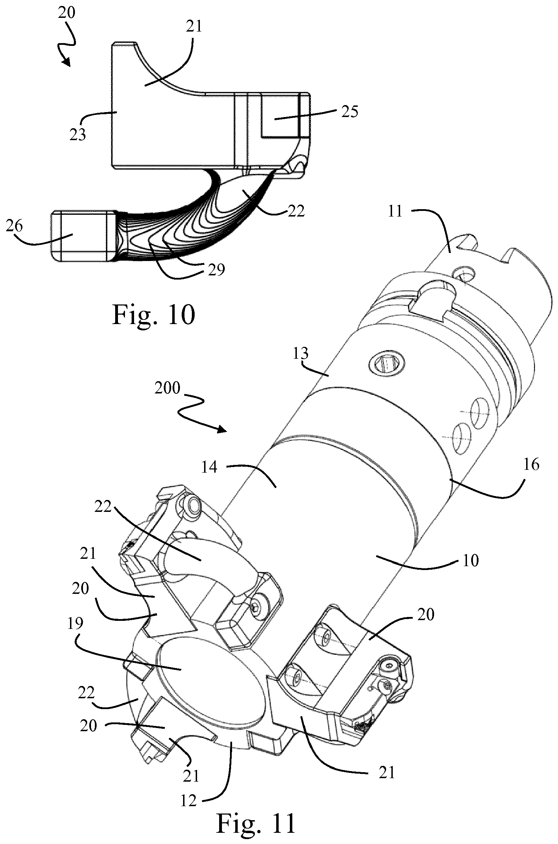

Ein rotierendes Zerspanungswerkzeug 200 gemäß einer zweiten Ausführungsform wird im Folgenden mit Bezug auf Fig. 11 beschrieben. Zur Vermeidung von Wiederholungen werden dabei dieselben Bezugszeichen wie bei der zuvor beschriebenen ersten Ausführungsform verwendet und es werden nur die Unterschiede zu der ersten Ausführungsform detaillierter beschrieben. Ansonsten gelten alle obigen Ausführungen, die zu der ersten Ausführungsform gemacht wurden, auch für die zweite Ausführungsform.

Das rotierende Zerspanungswerkzeug 200 gemäß der zweiten Ausführungsform unterscheidet sich darin von dem Zerspanungswerkzeug 100 gemäß der ersten Ausführungsform, dass anstelle von zwei Schneidenelementträgern 20 drei Schneidenelementträger 20 an dem zweiten Ende 12 des Grundkörpers 10 angeordnet sind, wie in Fig. 11 zu sehen ist. Die drei Schneidenelementträger 20 sind dabei über den Umfang des Grundkörpers 10 verteilt angeordnet.

Bei der zweiten Ausführungsform sind dabei drei Sitze 25 an drei verschiedenen Schneidenelementträgern 20 ausgebildet. Auch bei der zweiten Ausführungsform sind die Sitze 25 dabei an denselben axialen und radialen Positionen angeordnet, sodass das Zerspanungswerkzeug 200 drei Schneidkanten zur Bearbeitung desselben Abschnitts einer Bohrung aufweist.

### DRITTE AUSFÜHRUNGSFORM

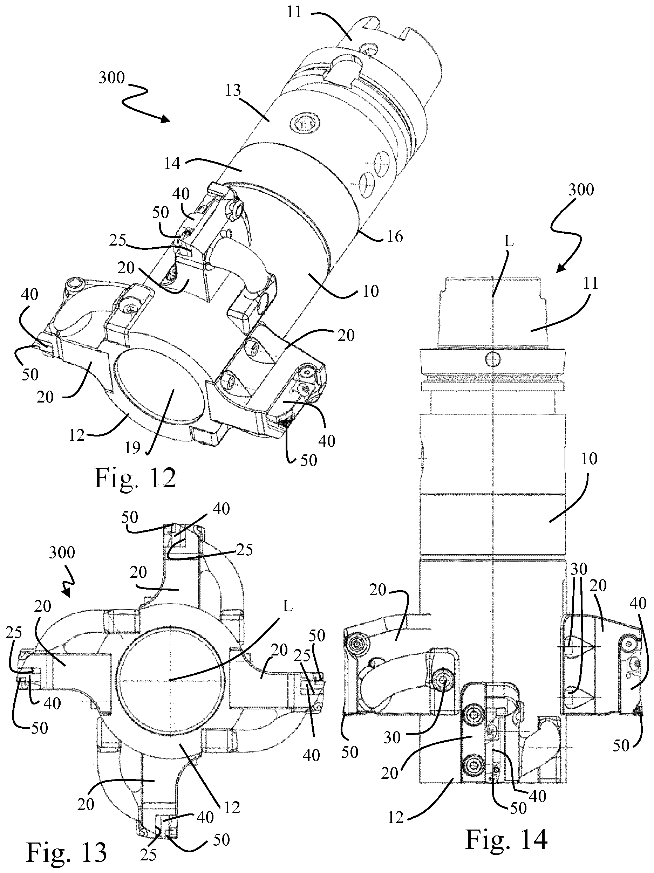

Ein rotierendes Zerspanungswerkzeug 300 gemäß einer dritten Ausführungsform wird im Folgenden mit Bezug auf die Fig. 12 bis Fig. 14 beschrieben. Zur Vermeidung von Wiederholungen werden dabei dieselben Bezugszeichen wie bei der zuvor beschriebenen ersten Ausführungsform verwendet und es werden nur die Unterschiede zu der ersten Ausführungsform detaillierter beschrieben. Ansonsten gelten alle obigen Ausführungen, die zu der ersten Ausführungsform gemacht wurden, auch für die dritte Ausführungsform.

Das rotierende Zerspanungswerkzeug 300 gemäß der dritten Ausführungsform unterscheidet sich darin von dem Zerspanungswerkzeug 100 gemäß der ersten Ausführungsform, dass anstelle von zwei Schneidenelementträgern 20 insgesamt vier Schneidenelementträger 20 an dem zweiten Ende 12 des Grundkörpers 10 angeordnet sind, wie in den Fig. 12 bis Fig. 14 zu sehen ist. Die vier Schneidenelementträger 20 sind dabei über den Umfang des Grundkörpers 10 verteilt angeordnet. Bei der dritten Ausführungsform ist ferner an jedem der Schneidenelementträger 20 jeweils ein Sitz 25 zur Aufnahme einer Schneide 50 oder einer Schneidenkassette 40 ausgebildet. Im Unterschied zu den zuvor beschriebenen Ausführungsformen sind die Sitze 25 bei dem Zerspanungswerkzeug 300 gemäß der dritten Ausführungsform aber nicht alle auf denselben axialen und radialen Positionen bezüglich der Längsachse L angeordnet, sondern es sind jeweils zwei sich gegenüberliegende Sitze 25 näher an dem zweiten Ende 12 angeordnet und zwei sich gegenüberliegende Sitze 25 etwas weiter von dem zweiten Ende 12 entfernt. Die Schneiden 50 befinden sich somit an unterschiedlichen axialen Positionen bezüglich der Längsachse L des Grundkörpers 10. Die axial näher an dem zweiten Ende 12 angeordneten Sitze befinden sich bei der dritten Ausführungsform in derselben axialen und radialen Position. Ebenso befinden sich die axial weiter von dem zweiten Ende 12 entfernten Sitze untereinander auf derselben axialen und radialen Position. Sowohl die axiale als auch die radiale Position der beiden Paare von Sitzen unterscheidet sich aber voneinander, sodass das Zerspanungswerkzeug 300 als ein Stufenbohrer ausgebildet ist, bei dem für jede Stufe jeweils zwei Schneidkanten realisiert sind.

Bei der dargestellten Ausführungsform sind die Schneidenelementträger 20 und damit die Sitze 25 in Umfangsrichtung in etwa gleichmäßig über den Umfang des Grundkörpers 10 verteilt, wie insbesondere in Fig. 13 zu sehen ist.

### VIERTE AUSFÜHRUNGSFORM

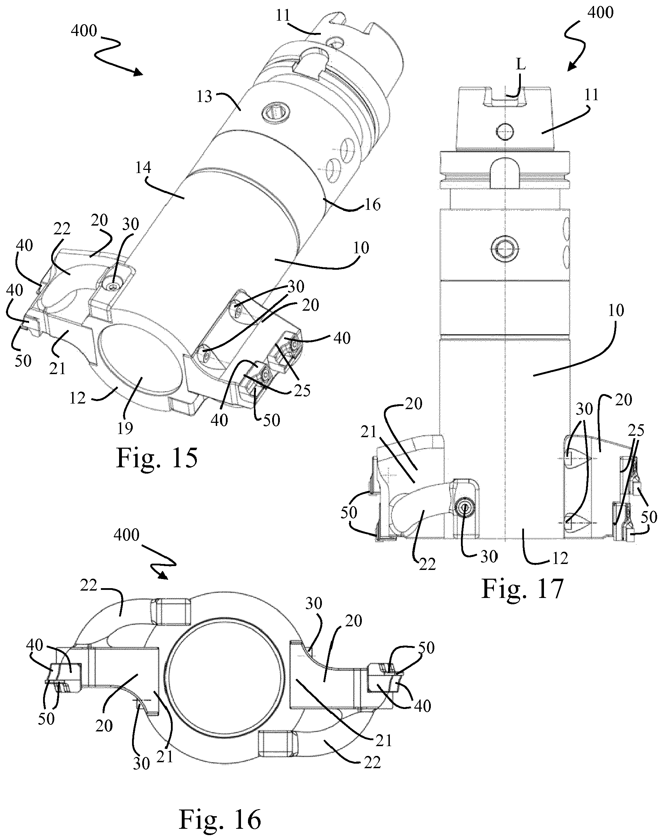

Ein rotierendes Zerspanungswerkzeug 400 gemäß einer vierten Ausführungsform wird im Folgenden mit Bezug auf die Fig. 15 bis Fig. 17 beschrieben. Zur Vermeidung von Wiederholungen werden dabei dieselben Bezugszeichen wie bei der zuvor beschriebenen ersten Ausführungsform verwendet und es werden nur die Unterschiede zu der ersten Ausführungsform detaillierter beschrieben. Ansonsten gelten alle obigen Ausführungen, die zu der ersten Ausführungsform gemacht wurden, auch für die vierte Ausführungsform.

Das rotierende Zerspanungswerkzeug 400 gemäß der vierten Ausführungsform unterscheidet sich darin von dem Zerspanungswerkzeug 100 gemäß der ersten Ausführungsform, dass die Schneidenelementträger 20 nicht nur jeweils einen Sitz 25 zur Aufnahme einer Schneide 50 oder einer Schneidenkassette 40 aufweisen, sondern stattdessen jeweils zwei Sitze 25. Bei jedem der Schneidenelementträger 20 sind die Sitze 25 dabei derart angeordnet, dass die darin unmittelbar oder mittelbar über eine Schneidenkassette 40 befestigten Schneiden 50 an unterschiedlichen axialen und radialen Positionen angeordnet sind. Bei der dargestellten Realisierung sind die beiden Sitze 25 eines Schneidenelementträgers 20 dabei bezüglich der Umfangsrichtung an derselben Position angeordnet. Bei einer Abwandlung ist es z.B. aber auch möglich, dass die Sitze 25 eines Schneidenelementträgers 20 auch an unterschiedlichen Umfangspositionen angeordnet sind.

Auch bei der vierten Ausführungsform ist somit das Zerspanungswerkzeug 400 (ähnlich wie bei der dritten Ausführungsform) als ein Stufenbohrer ausgebildet, wobei im Unterschied zur dritten Ausführungsform aber Schneiden 50 verschiedener Stufen an demselben Schneidenelementträger 20 angeordnet sind. Auch bei der vierten Ausführungsform sind pro Stufe jeweils zwei Schneidkanten vorgesehen.

### ABWANDLUNGEN

Obwohl bei der dritten und der vierten Ausführungsform jeweils als Stufenbohrer ausgebildete Zerspanungswerkzeuge beschrieben wurden, die pro Stufe jeweils zwei Schneidkanten für jeden Bohrungsabschnitt aufweisen, ist es z.B. auch möglich, pro Stufe mehr als zwei Schneidkanten vorzusehen oder nur eine Schneidkante pro Stufe vorzusehen.

Obwohl als Ausführungsformen nur Zerspanungswerkzeuge beschrieben wurden, bei denen an einem Schneidenelementträger 20 nur ein oder zwei Sitze 25 ausgebildet sind, ist es z.B. auch möglich, mehr als zwei Sitze 25 an einem Schneidenelementträger 20 auszubilden.

Obwohl lediglich Ausführungsformen beschrieben wurden, bei denen die additiv gefertigten Schneidenelementträger 20 jeweils aus einem faserverstärkten Kunststoff ausgebildet sind, sind alternativ auch Realisierungen möglich, bei denen der Schneidenelementträger additiv aus einem anderen Material gefertigt ist, z.B. aus einem Kunststoff ohne Faserverstärkung, einem metallischen Material, wie insbesondere Stahl, etc.

Obwohl oben nur Ausführungsformen beschrieben wurden, bei denen das Zerspanungswerkzeug maximal drei Schneiden pro Stufe aufweist bzw. maximal insgesamt vier Schneiden, ist es auch möglich, pro Stufe mehr als drei Schneiden und zugehörige Schneidkanten vorzusehen, insbesondere vier, fünf, sechs, etc. Ebenso ist es möglich insgesamt mehr als vier Schneiden und zugehörige Schneidkanten vorzusehen, insbesondere fünf, sechs, sieben, etc. Ferner ist es auch möglich, z.B. bei einer Realisierung als Stufenbohrer mehr als zwei Stufen vorzusehen.

## Patentansprüche

1. Rotierendes Zerspanungswerkzeug (100; 200; 300; 400) mit:
einem Grundkörper (10), der sich entlang einer Längsachse (L) erstreckt und ein erstes Ende (11) zur Verbindung mit einer Maschinenschnittstelle und ein freies zweites Ende (12) aufweist, und
zumindest einem additiv gefertigten Schneidenelementträger (20), der derart an dem zweiten Ende (12) des Grundkörpers (10) angeordnet ist, dass er sich von einem Umfangssegment des Grundkörpers (10) bezüglich der Längsachse (L) als Vorsprung nach radial außen erstreckt, wobei der Schneidenelementträger (20) zumindest einen Sitz (25) zur Aufnahme einer Schneide (50) oder einer Schneidenkassette (40) aufweist.

2. Rotierendes Zerspanungswerkzeug nach Anspruch 1, wobei der Schneidenelementträger (20) aus einem Kunststoff, insbesondere einem faserverstärkten Kunststoff, gebildet ist.

3. Rotierendes Zerspanungswerkzeug nach Anspruch 1 oder 2, wobei eine Mehrzahl von Sitzen (25) an verschiedenen axialen und radialen Positionen bezüglich der Längsachse (L) des Grundkörpers (10) ausgebildet ist.

4. Rotierendes Zerspanungswerkzeug nach einem der vorangehenden Ansprüche, wobei der Schneidenelementträger (20) eine Mehrzahl von Sitzen (25) zur Aufnahme von Schneiden (50) oder Schneidenkassetten (40) aufweist.

5. Rotierendes Zerspanungswerkzeug nach Anspruch 3 oder 4, wobei die Mehrzahl von Sitzen (25) über den Umfang des Grundkörpers (10) verteilt angeordnet ist.

6. Rotierendes Zerspanungswerkzeug nach Anspruch 4 oder 5, wobei an dem Schneidenelementträger (20) eine Mehrzahl von an verschiedenen axialen und radialen Positionen bezüglich der Längsachse (L) des Grundkörpers (10) ausgebildeten Sitzen (25) ausgebildet ist.

7. Rotierendes Zerspanungswerkzeug nach einem der vorangehenden Ansprüche, wobei der Schneidenelementträger (20) über eine reversible Verbindung mit dem Grundkörper (10) verbunden ist.

8. Rotierendes Zerspanungswerkzeug nach einem der vorangehenden Ansprüche, wobei der Schneidenelementträger (20) einen sich überwiegend in radialer Richtung erstreckenden Halteabschnitt (21), an dem der Sitz (25) ausgebildet ist, und eine bezüglich einer vorgegebenen Rotationsrichtung (R) des Zerspanungswerkzeugs (100) in Umfangsrichtung hinter dem Sitz (25) ansetzende, einstückig mit dem Halteabschnitt (21) ausgebildete Stützstrebe (22) zur Abstützung gegen Tangentialkräfte aufweist.

9. Rotierendes Zerspanungswerkzeug nach Anspruch 8, wobei sich die Stützstrebe (22) gekrümmt von dem Halteabschnitt (21) zu dem Grundkörper (10) erstreckt.

10. Rotierendes Zerspanungswerkzeug nach einem der vorangehenden Ansprüche, wobei in dem Schneidenelementträger (20) Langfasern eingebettet sind.

11. Rotierendes Zerspanungswerkzeug nach einem der Ansprüche 8 bis 10, wobei sich die Stützstrebe (22) mit zunehmendem Abstand von dem Halteabschnitt (21) von dem freien zweiten Ende (12) des Grundkörpers (10) entfernt.

12. Rotierendes Zerspanungswerkzeug nach einem der vorangehenden Ansprüche, wobei an dem Sitz (25) eine Schneidenkassette (40) angeordnet ist, in der eine Schneide (50) gehalten ist.

13. Rotierendes Zerspanungswerkzeug nach Anspruch 12, wobei die Schneidenkassette (40) aus einem verschleißbeständigeren Material als der Schneidenelementträger (20) gebildet ist.

14. Rotierendes Zerspanungswerkzeug nach einem der vorangehenden Ansprüche, wobei zumindest zwei Schneidenelementträger (20) an dem zweiten Ende (12) des Grundkörpers (100) angeordnet sind.

15. Rotierendes Zerspanungswerkzeug nach einem der vorangehenden Ansprüche, das als ein Aufbohrwerkzeug ausgebildet ist.
